# EUROPÄISCHE PATENTANMELDUNG

(11) **EP 2 012 515 A2**
(43) Veröffentlichungstag der Anmeldung: **07.01.2009**
(21) Anmeldenummer: 08159437.6
(22) Anmeldetag: 01.07.2008
(51) Int. Cl.: H04M 3/42

(54) **Verfahren zum Bereitstellen einer Auswahl möglicher Kommunikationskanäle zum Herstellen einer Kommunikationsverbindung zwischen Endgeräten**

(30) Priorität: 03.07.2007 DE 102007030822
(71) Anmelder: Vodafone Holding GmbH, 40213 Düsseldorf (DE)
(72) Erfinder: Holtel, Stefan, 82008 Unterhaching (DE); Rauch, Christian, 82418 Seehausen (DE)
(74) Vertreter: Müller, Thomas

(57) **Zusammenfassung**

Die vorliegende Erfindung betrifft unter anderem ein Verfahren zum Bereitstellen einer Auswahl möglicher Kommunikationskanäle zum Herstellen einer Kommunikationsverbindung zwischen Endgeräten (30; 40, 41) eines ersten Teilnehmers und eines zweiten Teilnehmers. Damit der erste Teilnehmer den zu verwendenden Kommunikationskanal eigenständig auswählen kann, ist folgendes vorgesehen: Eine innerhalb eines Kommunikationsnetzes (10) vorgesehene Rechnereinheit (21) empfängt vom Endgerät (30) des ersten Teilnehmers eine Adresskennung des zweiten Teilnehmers, welcher Teilnehmer des Kommunikationsnetzes (10) ist, wobei die Adresskennung des zweiten Teilnehmers innerhalb der Rechnereinheit (21) mit einer Auswahldatei verknüpft ist, aus welcher Kommunikationskanäle, über die der zweite Teilnehmer erreichbar ist; auswählbar sind. Innerhalb der Rechnereinheit (21) erfolgt eine Überprüfung, welche Kommunikationskanäle des zweiten Teilnehmers zur Herstellung einer Kommunikationsverbindung aktiv sind. Die Rechnereinheit (21) übermittelt dem ersten Teilnehmer zur Auswahl eines gewünschten Kommunikationskanals alle aktiven Kommunikationskanäle des zweiten Teilnehmers. Anschließend wird die Kommunikationsverbindung (50 a, b) über den ausgewählten Kommunikationskanal hergestellt.

## Beschreibung

Die vorliegende Erfindung betrifft zunächst ein Verfahren zur Herstellung einer Kommunikationsverbindung zwischen Endgeräten eines ersten Teilnehmers und eines zweiten Teilnehmers sowie ein Verfahren zur Herstellung einer Kommunikationsverbindung zwischen Endgeräten eines ersten Teilnehmers und eines zweiten Teilnehmers. Weiterhin betrifft die Erfindung eine Rechnereinheit innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers sowie ein Portal innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers und zum Herstellen einer solchen Kommunikationsverbindung.

Mit zunehmender Etablierung verschiedener Kommunikationsnetze entsteht eine damit verbundene immer größer werdende Vielfalt an unterschiedlichen Kommunikationsmöglichkeiten. Teilnehmer können häufig über unterschiedliche Kommunikationsmittel (Endgeräte) in unterschiedlichen Kommunikationsnetzen miteinander kommunizieren, wobei diverse Kommunikationsmöglichkeiten möglich sind. Die Kommunikation erfolgt dabei über die unterschiedlichsten Typen von Endgeräten, wie beispielsweise Telefonen (etwa Festnetztelefone, Mobiltelefone), Computern, PDAs (Personal digital Assistant) und dergleichen.

Es war zunächst jedoch noch nicht möglich, verschiedene Typen von Kommunikationsmöglichkeiten gleichzeitig zu verwenden. Insbesondere war es zunächst nicht möglich, verschiedenartige Endgeräte, die unterschiedlichen Kommunikationsparadigmen gehorchen (beispielsweise Sprache, Text und dergleichen) in einem einzigen System zu integrieren.

Um diesen Nachteil zu umgehen, ist in der älteren deutschen Patentanmeldung DE 10 2006 025 415.5 der Anmelderin ein Verfahren zum Weiterleiten einer Nachricht, insbesondere eines Anrufs, eines ersten Teilnehmers zu einem zweiten Teilnehmer beschrieben, wobei der zweite Teilnehmer über wenigstens zwei Anschlüsse in unterschiedlichen Kommunikationsnetzen verfügt.

In einem ersten Schritt wird die vom ersten Teilnehmer ausgehende Nachricht einer Rechnereinheit innerhalb eines Telekommunikationsnetzes, insbesondere eines Mobilfunknetzes, in dem der zweite Teilnehmer als Nutzer registriert ist, zugeleitet. Innerhalb der Rechnereinheit erfolgt in einem nächsten Schritt eine Überprüfung, zu welchem Anschluss des zweiten Teilnehmers die Nachricht weitergeleitet werden soll. Bei der Überprüfung handelt es sich dabei um eine Art Adressierung beziehungsweise Auflösung der Adressierung. Auf der Basis dieser Überprüfung wird die Nachricht innerhalb des Telekommunikationsnetzes an ein erstes Endgerät des zweiten Teilnehmers übertragen und/oder über ein der Rechnereinheit zugeordnetes Media-Gateway vom Telekommunikationsnetz zu zumindest einem anderen, in einem Computernetz befindlichen Anschluss des zweiten Teilnehmers signalisiert.

Durch dieses Verfahren wird es ermöglicht, dass der zweite Teilnehmer in unterschiedlichen Kommunikationsnetzen, in denen dieser registriert ist, erreicht werden kann. Insbesondere ist es möglich, Anrufe aus einem Telekommunikationsnetz, beispielsweise einem Mobilfunknetz, an Teilnehmer in einem Computernetz, weiterzuleiten. Mit dem genannten Verfahren ist es insbesondere möglich, Voice over IP-Gespräche in Verbindung mit Mobilfunk durchzuführen. VOIP-Teilnehmer können nunmehr mit ganz normalen GSM/UMTS-Mobiltelefonen erreicht werden. GSM/UMTS-Teilnehmer können ihre Gespräche an VOIP-Geräten entgegennehmen.

Bei dieser bekannten Lösung erfolgt die Entscheidung, an welchen Anschluss des zweiten Teilnehmers die Nachricht weitergeleitet werden soll, innerhalb der Rechnereinheit und damit ohne direkte Einflussnahme durch den ersten Telnehmer. Die bekannte Lösung ist somit nicht auf eine Lösung gerichtet, bei der der erste Teilnehmer die Möglichkeit haben soll, aus den zur Verfügung stehenden Kommunikationskanälen selbst auszuwählen.

Ausgehend vom genannten Stand der Technik liegt der vorliegenden Erfindung die Aufgabe zugrunde, eine Lösung bereitzustellen, mittels derer der erste Teilnehmer, der eine Kommunikationsverbindung zu einem zweiten Teilnehmer aufbauen möchte, geeignete Kommunikationskanäle zum Herstellen einer Kommunikationsverbindung selbst auswählen kann.

Diese Aufgabe wird erfindungsgemäß gelöst durch das Verfahren zur Herstellung einer Kommunikationsverbindung zwischen Endgeräten eines ersten Teilnehmers und eines zweiten Teilnehmers mit den Merkmalen gemäß dem unabhängigen Patentanspruch 1, das Verfahren zur Herstellung einer Kommunikationsverbindung zwischen Endgeräten eines ersten Teilnehmers und eines zweiten Teilnehmers mit den Merkmalen gemäß dem unabhängigen Patentanspruch 6, die Rechnereinheit innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers mit den Merkmalen gemäß dem unabhängigen Patentanspruch 8 sowie das Portal innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers und zum Herstellen einer solchen Kommunikationsverbindung mit den Merkmalen gemäß dem unabhängigen Patentanspruch 10.

Weitere Merkmale und Details der Erfindung ergeben sich aus den Unteransprüchen, der Beschreibung sowie den Zeichnungen. Merkmale und Details, die im Zusammenhang mit einem der beiden Verfahrensaspekte der Erfindung beschrieben sind, gelten dabei selbstverständlich auch im Zusammenhang mit dem jeweils anderen Verfahrensaspekt, und umgekehrt. Merkmale und Details, die im Zusammenhang mit den beiden erfindungsgemäßen Verfahrensaspekten beschrieben sind, gelten selbstverständlich auch im Zusammenhang mit der erfindungsgemäßen Rechnereinheit und dem erfindungsgemäßen Portal, und jeweils umgekehrt.

Die vorliegende Erfindung ist insbesondere an solche Kommunikationsteilnehmer gerichtet, die über unterschiedliche Typen von Kommunikationsmöglichkeiten mit entsprechenden Endgeräten verfügen, welche unterschiedliche Kommunikationskanäle und Kommunikationsformen ermöglichen.

Gemäß dem ersten Aspekt der Erfindung wird ein Verfahren zum Bereitstellen einer Auswahl möglicher Kommunikationskanäle zum Herstellen einer Kommunikationsverbindung zwischen Endgeräten eines ersten Teilnehmers und eines zweiten Teilnehmers, bereitgestellt, das gekennzeichnet ist durch folgende Schritte: a) Eine innerhalb eines Kommunikationsnetzes vorgesehene Rechnereinheit empfängt vom Endgerät des ersten Teilnehmers eine Adresskennung des zweiten Teilnehmers, welcher Teilnehmer des Kommunikationsnetzes ist, wobei die Adresskennung des zweiten Teilnehmers innerhalb der Rechnereinheit mit einer Auswahldatei verknüpft ist, aus welcher Kommunikationskanäle, über die der zweite Teilnehmer erreichbar ist; auswählbar sind, b) Innerhalb der Rechnereinheit erfolgt eine Überprüfung, welche Kommunikationskanäle des zweiten Teilnehmers zur Herstellung einer Kommunikationsverbindung aktiv sind; c) Die Rechnereinheit übermittelt dem ersten Teilnehmer zur Auswahl eines gewünschten Kommunikationskanals alle aktiven Kommunikationskanäle des zweiten Teilnehmers.

Gemäß dem ersten Aspekt der Erfindung geht es um ein Verfahren, durch das einem Teilnehmer, der eine Kommunikationsverbindung zu einem anderen Teilnehmer aufbauen möchte, eine Auswahl möglicher Kommunikationskanäle zum Herstellen einer solchen Kommunikationsverbindung bereitgestellt wird. Aus dieser Auswahl an Kommunikationskanälen kann dann der Teilnehmer den für ihn geeigneten Kommunikationskanal auswählen, wie im Zusammenhang mit dem zweiten Verfahrensaspekt der Erfindung näher erläutert wird.

Dabei ist die Erfindung nicht auf bestimmte Typen von Endgeräten beschränkt. Bei den in Frage kommenden Endgeräten kann es sich um jegliche Typen von Endgeräten handeln, mittels derer eine Kommunikation, beispielsweise eine synchrone und/oder asynchrone Kommunikation durchgeführt werden kann. Dies wird im weiteren Verlauf der Beschreibung näher erläutert. Zu denken ist beispielsweise an Endgeräte in Form von Mobiltelefonen, Festnetztelefonen, stationären und portablen Computern (etwa mit Chatfunktion, eMail-Funktion, Voice over IP-Funktion und dergleichen), PDAs (Personal Digital Assistant), Geräten zum Empfangen und Senden von eMail, und dergleichen.

Zur Durchführung des Verfahrens ist zunächst eine Rechnereinheit vorgesehen, die in einem Kommunikationsnetz integriert ist. Dabei ist die Erfindung selbstverständlich nicht auf bestimmte Typen von Kommunikationsnetzen beschränkt. Beispielsweise kann es sich bei einem geeigneten Kommunikationsnetz um ein Telekommunikationsnetz, etwa ein Mobilfunknetz, handeln.

Wenn der erste Teilnehmer eine Kommunikation zu einem zweiten Teilnehmer etablieren möchte, meldet er sich bei der Rechnereinheit und wählt den gewünschten zweiten Teilnehmer aus. Die Rechnereinheit empfängt vom Endgerät des ersten Teilnehmers eine Adresskennung des zweiten Teilnehmers, welcher Teilnehmer des Kommunikationsnetzes ist. Dabei kann beispielsweise vorgesehen sein, dass sich der erste Teilnehmer zunächst bei der Rechnereinheit meldet und in dieser (das heißt in Bezug auf sein Endgerät extern) die Adresskennung auswählt. Es ist natürlich auch denkbar, dass der Teilnehmer die Adresskennung in seinem Endgerät auswählt (das heißt in Bezug auf sein Endgerät intern), und dass die ausgewählte Adresskennung zur Rechnereinheit übertragen und in dieser empfangen wird.

Dabei kann die Adresskennung je nach Art des Kommunikationsnetzes unterschiedlich ausgebildet sein. Beispielsweise kann es sich bei der Adresskennung um eine bestimmte Telefonnummer des zweiten Teilnehmers handeln, die der erste Teilnehmer anwählt. Es wäre auch denkbar, dass der erste Teilnehmer auf seinem Endgerät über eine Adressdatei verfügt, aus der er, beispielsweise durch Anklicken, die Adresskennung des gewünschten zweiten Teilnehmers aktiviert.

Die Adresskennung des zweiten Teilnehmers ist innerhalb der Rechnereinheit mit einer Auswahldatei verknüpft. Aus dieser Auswahldatei sind solche Kommunikationskanäle, über die der zweite Teilnehmer erreichbar ist; auswählbar.

Innerhalb der Rechnereinheit erfolgt nun eine Überprüfung, welche Kommunikationskanäle des zweiten Teilnehmers zur Herstellung einer Kommunikationsverbindung aktiv sind. In der Rechnereinheit wird somit geprüft, welche Kommunikationskanäle auf Seiten des zweiten Teilnehmers zur Verfügung stehen. Dies kann auf unterschiedliche Weise erfolgen, wie im weiteren Verlauf der Beschreibung noch näher erläutert wird. Beispielsweise könnte die Rechnereinheit bei den am Ende der Kommunikationskanäle befindlichen Endgeräten des zweiten Teilnehmers nachfragen, ob diese gerade aktiv sind. Natürlich ist auch denkbar, dass sich die Endgeräte des zweiten Teilnehmers bei der Rechnereinheit anmelden oder abmelden, sobald sie aktiviert beziehungsweise deaktiviert werden. Die Rechnereinheit registriert alle Endgeräte des zweiten Teilnehmers sowie deren Fähigkeiten, einen oder mehrere spezifische Kommunikationskanäle bereitzustellen, über die der zweite Teilnehmer kommunizieren kann. Wenn sich die Endgeräte des zweiten Teilnehmers bei der Rechnereinheit anmelden oder abmelden, sobald sie aktiviert beziehungsweise deaktiviert werden, passt die Rechnereinheit die Auswahldatei entsprechend an.

Nach erfolgter Überprüfung übermittelt die Rechnereinheit dem ersten Teilnehmer zur Auswahl eines gewünschten Kommunikationskanals alle aktiven Kommunikationskanäle des zweiten Teilnehmers. Der erste Teilnehmer kann sich dann aussuchen, welchen Kommunikationskanal er benutzen möchte. Er bekommt somit die Möglichkeit, den für die von ihm gewünschte Kommunikation besten Kommunikationskanal auszuwählen. Beispielsweise kann vorgesehen sein, dass nur solche Kommunikationskanäle übermittel werden, die auch tatsächlich aktiv sind. Deaktivierte Kommunikationskanäle werden in einem solchen Fall nicht übermittelt. Es ist allerdings auch denkbar, dass grundsätzlich immer alle Kommunikationskanäle, über die der zweite Teilnehmer verfügt, übermittelt werden, wobei dann solche Kommunikationskanäle, die aktiv oder inaktiv sind, entsprechend gekennzeichnet sind. In einem solchen Fall erhält der erste Teilnehmer einen generellen Überblick über alle Kommunikationskanäle, über die der zweite Teilnehmer verfügt, weiß aber gleichzeitig auch, welche der Kommunikationskanäle aktuell tatsächlich aktiv sind.

Der erste Teilnehmer, der mit dem zweiten Teilnehmer kommunizieren möchte, erhält von der Rechnereinheit alle Möglichkeiten an Kommunikationskanälen, aus denen er dann auswählen kann. Somit wird gemäß der vorliegenden Erfindung ein anderes Prinzip als bei der älteren DE 10 2006 025 415.5 verfolgt. Wenn bei dieser älteren Lösung der erste Teilnehmer mit dem zweiten Teilnehmer kommunizieren möchte, wählt die Rechnereinheit den geeigneten Kommunikationskanal in das passende Kommunikationsnetz aus.

Die vorliegende Erfindung ist nicht auf bestimmte Typen von Kommunikationskanälen beschränkt. Im Folgenden werden hierzu einige vorteilhafte, jedoch nicht ausschließliche Beispiele näher erläutert.

Vorzugsweise sind aus der Auswahldatei asynchrone und/oder synchrone Kommunikationskanäle auswählbar, wobei innerhalb der Rechnereinheit eine Überprüfung erfolgt, welche asynchronen und/oder synchronen Kommunikationskanäle des zweiten Teilnehmers zur Herstellung einer Kommunikationsverbindung aktiv sind und wobei die Rechnereinheit dem ersten Teilnehmer zur Auswahl eines gewünschten Kommunikationskanals alle aktiven asynchronen und/oder synchronen Kommunikationskanäle des zweiten Teilnehmers übermittelt.

Gemäß dieser Weiterbildung der Erfindung wird somit zwischen synchronen und asynchronen Kommunikationskanälen unterschieden. Über einen synchronen Kommunikationskanal soll dabei eine direkte oder direkt erlebte Kommunikation ohne nennenswerte Zeitverzögerung erfolgen können. Bei einer synchronen Kommunikation handelt es sich beispielsweise um Telefonie, Bildtelefonie, Chat, Instant Messanging und dergleichen. Bei einer synchronen Kommunikation können Audiodaten, Bilddaten, Textdaten und dergleichen ausgetauscht werden. Über einen asynchronen Kommunikationskanal hingegen soll eine zeitversetzte Kommunikation erfolgen können. Insbesondere kann es bei einer asynchronen Kommunikation erforderlich sein, dass der Empfänger selbst etwas tun muss, um eine Nachricht zu erhalten. Bei einer asynchronen Kommunikation handelt es sich beispielsweise um das Versenden und Empfangen von SMS, MMS oder eMail, die Benutzung einer Anrufbeantworterfunktion bei Telefonen, das Versenden von Telefaxen und dergleichen. Natürlich sind auch Kombinationen aus synchronen und asynchronen Kommunikationskanälen möglich.

Bei der beschriebenen vorteilhaften Weiterbildung der Erfindung lassen sich insbesondere vier archetypisch verschiedene Kommunikationskanäle integrieren, nämlich eine synchrone/asynchrone Textkommunikation, sowie eine synchrone/asynchrone Sprachkommunikation. Mit dem erfindungsgemäßen Verfahren wird eine einfache Auswahl zwischen den verschiedenen Kommunikationskanälen möglich, je nachdem, welcher der Kanäle gerade verfügbar ist. Jedes Endgerät kann prinzipiell vier archetypische Kommunikationsformen anbieten. Einige Endgeräte können beispielsweise nur einen Kommunikationskanal anbieten (zum Beispiel einfache Telefone oder Faxgeräte), wohingegen andere Endgeräte auch mehrere Kommunikationskanäle anbieten können (beispielsweise Mobiltelefone für direkte Telefonate, Anrufbeantworterfunktion und SMS; Computer mit Voice over IP-Funktion, SMS und eMail).

Über die verschiedenen Kommunikationskanäle können die unterschiedlichsten Arten von Nachrichten ausgetauscht werden. Hierbei kann es sich beispielsweise um Sprachnachrichten in Form von Telefonanrufen, Nachrichten auf der Basis von Schriftdaten, etwa SMS, email und dergleichen, Nachrichten auf der Basis von Bilddaten, etwa MMS, email und dergleichen, und so weiter handeln. Es kann sich insbesondere um jede Form von Nachrichten handeln, die in einem einzelnen Kommunikationsnetz oder zwischen verschiedenen Kommunikationsnetzen übertragen werden können.

Vorteilhaft kann in einem vorangehenden Registrierungsschritt der zweite Teilnehmer der Rechnereinheit solche Kommunikationskanäle, über die er erreichbar ist, mitteilen, wobei die mitgeteilten Kommunikationskanäle in der Auswahldatei abgespeichert werden. In dem Registrierungsschritt gibt der zweite Teilnehmer folglich bei der Rechnereinheit an, über welche Kommunikationsmöglichkeiten er verfügt.

Vorzugsweise ist vorgesehen, dass nach dem Empfang der Adresskennung des zweiten Teilnehmers die Rechnereinheit alle in der Auswahldatei abgespeicherten Kommunikationskanäle überprüft, ob diese zur Herstellung einer Kommunikationsverbindung aktiv sind.

Diese Überprüfung kann auf unterschiedliche Weise erfolgen. Beispielsweise kann die Rechnereinheit dann, wenn sie vom ersten Teilnehmer eine entsprechende Adresskennung des zweiten Teilnehmers erhält, alle in der mit der Adresskennung verknüpften Auswahldatei befindlichen Kommunikationskanäle dahingehend überprüfen, ob diese gerade aktiv sind. Eine Überprüfung findet in einem solchen Fall immer nur dann statt, wenn auch tatsächlich ein Bedarf hierfür existiert. In weiterer Ausgestaltung kann beispielsweise auch vorgesehen sein, dass die am Ende eines Kommunikationskanals befindlichen Endgeräte des zweiten Teilnehmers immer dann automatisch ein Signal an die Rechnereinheit schicken, sobald die Endgeräte aktiviert oder deaktiviert werden, wodurch sich dann natürlich auch eine Aktivierung beziehungsweise Deaktivierung der jeweiligen Kommunikationskanäle ergibt. Die Rechnereinheit verfügt in diesem Fall zu jeder Zeit über Informationen, welche Kommunikationskanäle des zweiten Teilnehmers aktiv sind, und zwar unabhängig davon, ob eine diesbezügliche Anfrage des ersten Teilnehmers an die Rechnereinheit geschickt wurde. Vorteilhaft kann im Zusammenhang mit dem zweiten Beispiel vorgesehen sein, dass Aktivierungs- und Deaktivierungssignale bezüglich der in der Auswahldatei abgespeicherten Kommunikationskanäle, über die der zweite Teilnehmer erreichbar ist, von der Rechnereinheit empfangen und in Form von Statusinformationen zu den Kommunikationskanälen in der Auswahldatei abgespeichert werden.

Gemäß dem zweiten Verfahrensaspekt der Erfindung wird ein Verfahren zur Herstellung einer Kommunikationsverbindung zwischen Endgeräten eines ersten Teilnehmers und eines zweiten Teilnehmers, bereitgestellt, das gekennzeichnet ist durch folgende Schritte: a) Bereitstellen einer Auswahl möglicher Kommunikationskanäle zum Herstellen einer Kommunikationsverbindung zwischen dem Endgerät eines ersten Teilnehmers und wenigstens einem Endgerät eines zweiten Teilnehmers durch das Endgerät des ersten Teilnehmers mittels eines wie vorstehend beschriebenen erfindungsgemäßen Bereitstellungsverfahrens; b) Auswählen wenigstens eines Kommunikationskanals über das Endgerät des ersten Teilnehmers; und c) Herstellen der Kommunikationsverbindung über den ausgewählten Kommunikationskanal.

Bei diesem erfindungsgemäßen Verfahren geht es nunmehr um die tatsächliche Herstellung einer Kommunikationsverbindung zwischen dem Endgerät eines ersten Teilnehmers und dem Endgerät eines zweiten Teilnehmers.

Initiiert wird dieses Verfahren von Seiten des ersten Teilnehmers, dem in einem ersten Schritt zunächst eine Auswahl möglicher Kommunikationskanäle zum Herstellen einer Kommunikationsverbindung zwischen dem Endgerät eines ersten Teilnehmers und wenigstens einem Endgerät eines zweiten Teilnehmers bereitgestellt wird. Dies erfolgt durch ein Bereitstellungsverfahren gemäß dem ersten Verfahrensaspekt der vorliegenden Erfindung, so dass diesbezüglich auf die vorstehenden Ausführungen vollinhaltlich Bezug genommen und verwiesen wird.

Die Bereitstellung erfolgt dabei durch das Endgerät des ersten Teilnehmers. Dies kann auf unterschiedliche Weise erfolgen. Beispielsweise ist es denkbar, dass die Auswahl der aktiven Kommunikationskanäle von der Rechnereinheit auf das Endgerät des ersten Teilnehmers übertragen wird, und dass die tatsächliche Auswahl auf dem Endgerät erfolgt. In anderer Ausgestaltung ist denkbar, dass die Auswahl der aktiven Kommunikationskanäle nur auf der Rechnereinheit verfügbar gemacht wird und dass der erste Teilnehmer die Auswahl über sein Endgerät auf der Rechnereinheit vornimmt. Dies könnte beispielsweise in Form einer sprachgesteuerten Menüführung oder dergleichen erfolgen. Die Erfindung ist nicht auf bestimmte Ausführungsformen beschränkt. Wichtig ist lediglich, dass die Bereitstellung über das Endgerät des ersten Teilnehmers erfolgt, unabhängig davon, ob die physische Bereitstellung im Endgerät selbst, oder aber in der Rechnereinheit erfolgt.

Aus den bereitgestellten Kommunikationskanälen wählt nun der erste Teilnehmer über sein Endgerät wenigstens einen - aktiven - Kommunikationskanal aus. Anschließend wird eine Kommunikationsverbindung über den ausgewählten Kommunikationskanal hergestellt.

Der erste Teilnehmer, der mit dem zweiten Teilnehmer kommunizieren möchte, erhält alle Möglichkeiten an zur Verfügung stehenden Kommunikationskanälen und wählt aus diesen möglichen Kommunikationskanälen einen für ihn passenden Kommunikationskanal aus, um eine Kommunikationsverbindung zum zweiten Teilnehmer aufzubauen.

Vorteilhaft kann je nach ausgewähltem Kommunikationskanal eine Kommunikationsverbindung innerhalb des Kommunikationsnetzes und/oder über ein Media-Gateway zu zumindest einem zu dem Kommunikationsnetz unterschiedlichen Kommunikationsnetz hergestellt werden. Unter einem Media-Gateway ist generell ein Rechner oder eine Schnittstelle zu verstehen, der/die eine Kommunikation zwischen zwei verschiedenen Kommunikationsnetztypen vermittelt. Dabei ist die Erfindung natürlich nicht auf bestimmte Kommunikationsnetztypen beschränkt. Beispielsweise kann es sich bei einem ersten Kommunikationsnetz um ein Telekommunikationsnetz, insbesondere ein Mobilfunknetz, handeln. Bei einem anderen Kommunikationsnetz kann es sich beispielsweise, jedoch nicht ausschließlich um ein anderes Telekommunikationsnetz, das Internet, ein Computernetz auf der Grundlage des Internetprotokolls oder dergleichen handeln. Mittels eines derartigen Computernetzes ist es insbesondere möglich, IP-Telefonie, etwa VOIP-Telefonie (Voice over IP), durchzuführen.

Durch die beiden wie vorstehend beschriebenen Verfahrensaspekte der Erfindung kann ein erster Teilnehmer zu einem bestimmten Zeitpunkt, wenn er eine Kommunikationsverbindung zu einem zweiten Teilnehmer aufbauen möchte, einfach aus allen möglichen Kommunikationskanälen des zweiten Teilnehmers auswählen, die zu diesem Zeitpunkt gerade aktiv sind. Dabei kann die Auswahl basierend auf den grundsätzlichen Kommunikationsmodi der jeweiligen Endgeräte erfolgen, und/oder in Abhängigkeit von bestimmten Restriktionen, die der zweite Teilnehmer vorgibt.

Gemäß einem dritten Aspekt der Erfindung wird eine Rechnereinheit innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers, bereitgestellt, mit zumindest einer Schnittstelle zu einem Endgerät des ersten Teilnehmers zum Empfangen einer Adresskennung des zweiten Teilnehmers, welcher Teilnehmer des Kommunikationsnetzes ist, mit einer Speichereinheit, in der eine Auswahldatei abgespeichert ist, aus der Kommunikationskanäle, über die der zweite Teilnehmer erreichbar ist, auswählbar sind, wobei die Auswahldatei mit der Adresskennung verknüpft ist, mit einer Überprüfungseinrichtung zur Überprüfung, welche Kommunikationskanäle des zweiten Teilnehmers zur Herstellung einer Kommunikationsverbindung aktiv sind, mit einer Übermittlungseinheit zum Übermitteln aller aktiven Kommunikationskanäle des zweiten Teilnehmers an das Endgerät des ersten Teilnehmers.

Die Rechnereinheit ist durch Durchführung der wie vorstehend beschriebenen erfindungsgemäßen Verfahren ausgelegt, so dass auf die vorstehenden Ausführungen zu den beiden Verfahrensaspekten der Erfindung vollinhaltlich Bezug genommen und verwiesen wird. Die erfindungsgemäße Rechnereinheit zeichnet sich insbesondere dadurch aus, dass sie Mittel zur Durchführung der wie vorstehend beschriebenen erfindungsgemäßen Verfahren aufweist.

Gemäß noch einem weiteren Aspekt der Erfindung wird ein Portal innerhalb eines Kommunikationsnetzes zum Bereitstellen einer Auswahl möglicher Kommunikationskanäle zum Herstellen einer Kommunikationsverbindung zwischen Endgeräten eines ersten Teilnehmers und eines zweiten Teilnehmers und zum Herstellen einer solchen Kommunikationsverbindung bereitgestellt, aufweisend eine wie vorstehend beschriebene Rechnereinheit. Die Rechnereinheit ist zur Durchführung der wie vorstehend beschriebenen erfindungsgemäßen Verfahren ausgelegt, so dass auf die vorstehenden Ausführungen zu den beiden Verfahrensaspekten der Erfindung vollinhaltlich Bezug genommen und verwiesen wird. Das erfindungsgemäße Portal zeichnet sich insbesondere dadurch aus, dass es Mittel zur Durchführung der wie vorstehend beschriebenen erfindungsgemäßen Verfahren aufweist.

Die Teilnehmer greifen über ihre Endgeräte auf das Portal zu, um Kommunikationsverbindungen zu anderen Teilnehmern auf der Basis der weiter oben beschriebenen Verfahren herzustellen. Bei den Verfahrensabläufen kann es sich dann beispielsweise um bestimmte Services oder Dienste handeln, die vom Betreiber des Portals angeboten werden.

Vorteilhaft kann das Portal ein Media-Gateway zur Herstellung einer Kommunikationsverbindung zu zumindest einem zu dem Kommunikationsnetz unterschiedlichen Kommunikationsnetz aufweisen.

Das Portal kann beispielsweise Bestandteil eines Kommunikationssystems sein, welches wenigstens ein Kommunikationsnetz aufweist.

Die Erfindung wird nun anhand von Ausführungsbeispielen unter Bezugnahme auf die beiliegenden Zeichnungen näher erläutert. Es zeigen
- Figur 1: eine schematische Darstellung unterschiedlicher Kommunikationsmöglichkeiten, über die Kommunikationsteilnehmer verfügen können: und
- Figur 2: eine schematische Darstellung, an der der Ablauf der erfindungsgemäßen Verfahren verdeutlicht wird.

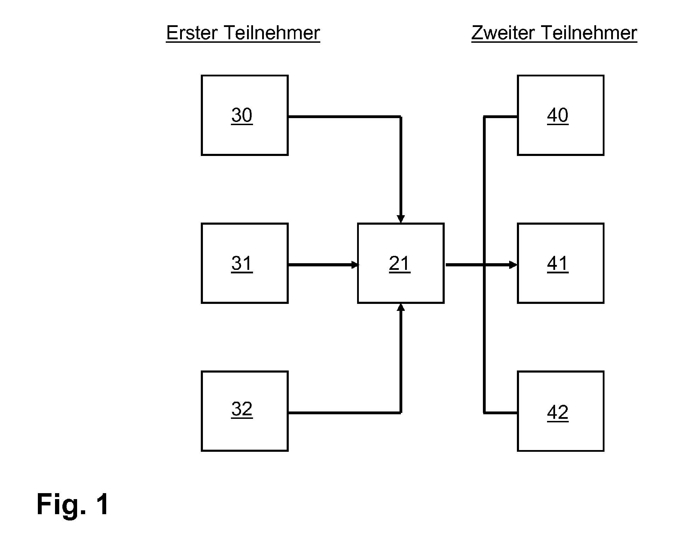

In Figur 1 ist allgemein dargestellt, wie eine immer größer werdende Vielfalt an unterschiedlichen Kommunikationsmöglichkeiten auf geeignete Weise beherrscht werden kann. Diesbezüglich wird insbesondere dem Umstand Rechnung getragen, dass Teilnehmer häufig über unterschiedliche Kommunikationsmittel (Endgeräte) in unterschiedlichen Kommunikationsnetzen miteinander kommunizieren können.

In dem in Figur 1 dargestellten Beispiel verfügt ein erster Teilnehmer über eine Reihe von Endgeräten, bei denen die Kommunikation über einen, oder aber auch über unterschiedliche Kommunikationskanäle stattfinden kann. Im dargestellten Beispiel verfügt der erste Teilnehmer beispielsweise über drei Kommunikationsmöglichkeiten. Beispielsweise kann er über ein Endgerät 30 in Form eines Telefons, etwa eines Mobiltelefons verfügen. Über einen dazugehörigen Kommunikationskanal lassen sich beispielsweise direkte Telefonate zu einem anderen Teilnehmer führen (synchrone Kommunikation). Auch ist es möglich, über einen Kommunikationskanal eine Anrufbeantworterfunktion eines anderen Teilnehmers zu erreichen, SMS zu verschicken (asynchrone Kommunikation), und dergleichen. Weiterhin könnte der erste Teilnehmer über ein zweites Endgerät 31 in Form eines mobilen oder stationären Computers verfügen. Hierüber könnte der erste Teilnehmer mit einem weiteren Teilnehmer beispielsweise synchron (Chat, Instant Messanging), oder aber auch asynchron (SMS, eMail) kommunizieren. Ein drittes Endgerät 32 könnte beispielsweise ein portables Gerät in Form eines PDA oder dergleichen sein, mittels dessen emails verschickt und Empfangen werden können. Über hierzu korrespondierende Endgeräte 40, 41, 42 könnte auch ein zweiter Teilnehmer verfügen.

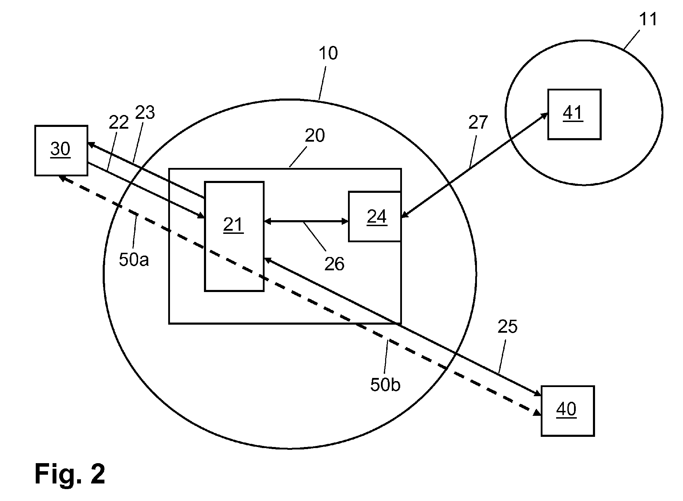

Der erste Teilnehmer, der mit dem zweiten Teilnehmer kommunizieren möchte, erhält von einer Rechnereinheit 21 nunmehr alle Möglichkeiten an Kommunikationskanälen des zweiten Teilnehmers, aus denen er dann auswählen kann. Wie dies funktioniert, wird im Zusammenhang mit Figur 2 in größerem Detail erläutert.

Zur Durchführung des Verfahrens ist zunächst eine Rechnereinheit 21 vorgesehen, die in einem Kommunikationsnetz 10 integriert ist. Dabei ist die Erfindung selbstverständlich nicht auf bestimmte Typen von Kommunikationsnetzen beschränkt. Im vorliegenden Beispiel soll es sich bei dem Kommunikationsnetz 10 um ein Telekommunikationsnetz, etwa ein Mobilfunknetz, handeln. Die Rechnereinheit 21 ist Bestandteil eines Portals 20 innerhalb des Telekommunikationsnetzes 10. Das Portal 20 wird vom Netzbetreiber betrieben, wobei das im weiteren Verlauf im Detail beschriebene Verfahren als Dienst oder Service angeboten wird. Das Portal 20 verfügt weiterhin noch über ein Media-Gateway 24, über welches eine Verbindung zu einem zweiten Kommunikationsnetz 11 herstellbar ist. Bei dem zweiten Kommunikationsnetz 11 handelt es sich im vorliegenden Beispiel um ein IP-basiertes Computernetz.

In dem Beispiel gemäß Figur 2 ist eine Situation dargestellt, in welcher ein erster Teilnehmer über ein ihm zugeordnetes erstes Endgerät 30 (ein Mobiltelefon) eine Kommunikation zu einem zweiten Teilnehmer etablieren möchte. Der zweite Teilnehmer soll ebenfalls über ein Endgerät 40 in Form eines Mobiltelefons verfügen. Über die Mobiltelefone 30, 40 kann zwischen den Teilnehmern innerhalb des Kommunikationsnetzes 10 sowohl eine synchrone als auch eine asynchrone Kommunikation erfolgen. Eine synchrone Kommunikation entspricht einem direkten Telefongespräch zwischen den beiden Teilnehmern. Eine asynchrone Kommunikation lässt sich beispielsweise durch Versenden von SMS oder die Aktivierung einer Anrufbeantworterfunktion realisieren.

Zusätzlich zu seinem Mobiltelefon 40 soll der zweite Teilnehmer auch noch über ein Endgerät 41 in Form eines Computers verfügen, welcher in einem Computernetz 11 integriert ist. Über den Computer 41 ist grundsätzlich auch eine synchrone Kommunikation möglich, etwa in Form von Chat, Instant Messanging und dergleichen. Ebenso ist eine asynchrone Kommunikation realisierbar, etwa durch das Verschicken von email und dergleichen.

Wenn der erste Teilnehmer eine Kommunikation zu dem zweiten Teilnehmer etablieren möchte, meldet er sich über sein Endgerät 30 zunächst bei der Rechnereinheit 21 und wählt den gewünschten zweiten Teilnehmer aus. Die Rechnereinheit 21 empfängt dazu vom Endgerät 30 des ersten Teilnehmers eine Adresskennung des zweiten Teilnehmers. Dies ist durch den Pfeil 22 dargestellt. Dabei kann beispielsweise vorgesehen sein, dass der erste Teilnehmer die Adresskennung in seinem Endgerät 30 auswählt, und dass die ausgewählte Adresskennung zur Rechnereinheit 21 übertragen und in dieser empfangen wird. Die Adresskennung des zweiten Teilnehmers ist innerhalb der Rechnereinheit 21 mit einer Auswahldatei verknüpft. Aus dieser Auswahldatei sind solche Kommunikationskanäle, über die der zweite Teilnehmer erreichbar ist; auswählbar.

Innerhalb der Rechnereinheit 21 erfolgt nun eine Überprüfung, welche Kommunikationskanäle des zweiten Teilnehmers zur Herstellung einer Kommunikationsverbindung aktiv sind. Damit dies geschehen kann, hat der zweite Teilnehmer seine Endgeräte 40, 41 sowie die Kommunikationskanäle, über die er erreichbar ist, der Rechnereinheit 21 in einem vorangegangenen Registrierungsschritt mitgeteilt. Diese Kommunikationskanäle werden in der dem zweiten Teilnehmer zugeordneten Auswahldatei abgespeichert.

In der Rechnereinheit 21 wird geprüft, welche Kommunikationskanäle auf Seiten des zweiten Teilnehmers derzeit aktiv zur Verfügung stehen. Dies kann beispielsweise erfolgen, indem sich die Endgeräte 40, 41 des zweiten Teilnehmers bei der Rechnereinheit anmelden oder abmelden, sobald sie aktiviert beziehungsweise deaktiviert werden. Dies ist für das Mobiltelefon 40 des zweiten Teilnehmers durch den Pfeil 25 dargestellt. Für den Computer 41 des zweiten Teilnehmers ist dies durch die Pfeile 26 und 27 verdeutlicht. Die Rechnereinheit registriert alle Endgeräte des zweiten Teilnehmers sowie deren Fähigkeiten, einen oder mehrere spezifische Kommunikationskanäle bereitzustellen, über die der zweite Teilnehmer kommunizieren kann. Wenn sich die Endgeräte des zweiten Teilnehmers bei der Rechnereinheit 21 anmelden oder abmelden, sobald sie aktiviert beziehungsweise deaktiviert werden, passt die Rechnereinheit 21 die Auswahldatei entsprechend an.

Nach erfolgter Überprüfung übermittelt die Rechnereinheit 21 dem ersten Teilnehmer zur Auswahl eines gewünschten Kommunikationskanals alle aktiven Kommunikationskanäle des zweiten Teilnehmers. Dies ist im Figurenbeispiel durch den Pfeil 23 verdeutlicht. Der erste Teilnehmer kann sich dann aussuchen, welchen Kommunikationskanal zum zweiten Teilnehmer er benutzen möchte. Er bekommt somit die Möglichkeit, den für die von ihm gewünschte Kommunikation besten Kommunikationskanal auszuwählen.

Im vorliegenden Beispiel könnte der erste Teilnehmer beispielsweise mitgeteilt bekommen, dass der zweite Teilnehmer über dessen Mobiltelefon 40 direkt (synchron), oder aber per SMS oder Anrufbeantworterfunktion indirekt (asynchron) erreicht werden kann. Ebenso erhält der erste Teilnehmer den Hinweis, dass der zweite Teilnehmer auch über dessen Computer 41 im Computernetzwerk 11 erreicht werden kann.

Aus den bereitgestellten Kommunikationskanälen wählt nun der erste Teilnehmer über sein Endgerät 30 wenigstens einen - aktiven - Kommunikationskanal aus, beispielsweise denjenigen, um eine synchrone Sprachverbindung zum Mobiltelefon des zweiten Teilnehmers aufzubauen. Anschließend wird eine Kommunikationsverbindung über den ausgewählten Kommunikationskanal hergestellt, was durch die Pfeile 50 a, b verdeutlicht ist.

### Bezugszeichenlist

- 10: Erstes Kommunikationsnetz
- 11: Zweites Kommunikationsnetz

- 20: Portal
- 21: Rechnereinheit
- 22: Übertragungsweg Endgerät-Rechnereinheit (Empfang Adresskennung)
- 23: Übertragungsweg Rechnereinheit-Endgerät (Übermittlung aktiver Kommunikationskanäle)

- 24: Media-Gateway
- 25: Übertragungsweg Rechnereinheit-Endgerät
- 26: Übertragungsweg Rechnereinheit-Endgerät
- 27: Übertragungsweg Media-Gateway-Endgerät

- 30: Endgerät (Mobiltelefon)
- 31: Endgerät (Computer)
- 32: Endgerät (PDA, Einrichtung zum Empfangen/Senden von email)

- 40: Endgerät (Mobiltelefon)
- 41: Endgerät (Computer)
- 42: Endgerät (PDA, Einrichtung zum Empfangen/Senden von eMail)

- 50a,b: Kommunikationsverbindung (synchron)

## Patentansprüche

1. Verfahren zum Bereitstellen einer Auswahl möglicher Kommunikationskanäle zum Herstellen einer Kommunikationsverbindung zwischen Endgeräten eines ersten Teilnehmers und eines zweiten Teilnehmers, **gekennzeichnet durch** folgende Schritte:
a) Eine innerhalb eines Kommunikationsnetzes (10) vorgesehene Rechnereinheit (21) empfängt vom Endgerät (30) des ersten Teilnehmers eine Adresskennung des zweiten Teilnehmers, welcher Teilnehmer des Kommunikationsnetzes (10) ist, wobei die Adresskennung des zweiten Teilnehmers innerhalb der Rechnereinheit (21) mit einer Auswahldatei verknüpft ist, aus welcher Kommunikationskanäle, über die der zweite Teilnehmer erreichbar ist; auswählbar sind,
b) Innerhalb der Rechnereinheit (21) erfolgt eine Überprüfung, welche Kommunikationskanäle des zweiten Teilnehmers zur Herstellung einer Kommunikationsverbindung aktiv sind;
c) Die Rechnereinheit (21) übermittelt dem ersten Teilnehmer zur Auswahl eines gewünschten Kommunikationskanals alle aktiven Kommunikationskanäle des zweiten Teilnehmers.

2. Verfahren nach Anspruch 1, **dadurch gekennzeichnet, dass** aus der Auswahldatei asynchrone und/oder synchrone Kommunikationskanäle auswählbar sind, dass innerhalb der Rechnereinheit (21) eine Überprüfung erfolgt, welche asynchronen und/oder synchronen Kommunikationskanäle des zweiten Teilnehmers zur Herstellung einer Kommunikationsverbindung aktiv sind und dass die Rechnereinheit (21) dem ersten Teilnehmer zur Auswahl eines gewünschten Kommunikationskanals alle aktiven asynchronen und/oder synchronen Kommunikationskanäle des zweiten Teilnehmers übermittelt.

3. Verfahren nach Anspruch 1 oder 2, **dadurch gekennzeichnet, dass** in einem vorangehenden Registrierungsschritt der zweite Teilnehmer der Rechnereinheit (21) solche Kommunikationskanäle, über die er erreichbar ist, mitteilt und dass die mitgeteilten Kommunikationskanäle in der Auswahldatei abgespeichert werden.

4. Verfahren nach einem der Ansprüche 1 bis 3, **dadurch gekennzeichnet, dass** nach dem Empfang der Adresskennung des zweiten Teilnehmers die Rechnereinheit (21) alle in der Auswahldatei abgespeicherten Kommunikationskanäle überprüft, ob diese zur Herstellung einer Kommunikationsverbindung aktiv sind.

5. Verfahren nach einem der Ansprüche 1 bis 4, **dadurch gekennzeichnet, dass** Aktivierungs- und Deaktivierungssignale bezüglich der in der Auswahldatei abgespeicherten Kommunikationskanäle, über die der zweite Teilnehmer erreichbar ist, von der Rechnereinheit (21) empfangen und in Form von Statusinformationen zu den Kommunikationskanälen in der Auswahldatei abgespeichert werden.

6. Verfahren zur Herstellung einer Kommunikationsverbindung (50 a, b) zwischen Endgeräten (30; 40) eines ersten Teilnehmers und eines zweiten Teilnehmers, **gekennzeichnet durch** folgende Schritte:
a) Bereitstellen einer Auswahl möglicher Kommunikationskanäle zum Herstellen einer Kommunikationsverbindung zwischen dem Endgerät (30) eines ersten Teilnehmers und wenigstens einem Endgerät (40) eines zweiten Teilnehmers **durch** das Endgerät (30) des ersten Teilnehmers mittels eines Verfahrens nach einem der Ansprüche 1 bis 5;
b) Auswählen wenigstens eines Kommunikationskanals über das Endgerät (30) des ersten Teilnehmers; und
c) Herstellen der Kommunikationsverbindung (50 a, b) über den ausgewählten Kommunikationskanal.

7. Verfahren nach Anspruch 6, **dadurch gekennzeichnet, dass** je nach ausgewähltem Kommunikationskanal eine Kommunikationsverbindung (50 a, b) innerhalb des Kommunikationsnetzes (10) und/oder über ein Media-Gateway (24) zu zumindest einem zu dem Kommunikationsnetz (10) unterschiedlichen Kommunikationsnetz (11) hergestellt wird.

8. Rechnereinheit (21) innerhalb eines Kommunikationsnetzes (10) zum Bereitstellen einer Auswahl möglicher Kommunikationskanäle zum Herstellen einer Kommunikationsverbindung zwischen Endgeräten (30; 40) eines ersten Teilnehmers und eines zweiten Teilnehmers, mit zumindest einer Schnittstelle zu einem Endgerät (30) des ersten Teilnehmers zum Empfangen einer Adresskennung des zweiten Teilnehmers, welcher Teilnehmer des Kommunikationsnetzes (10) ist, mit einer Speichereinheit, in der eine Auswahldatei abgespeichert ist, aus der Kommunikationskanäle, über die der zweite Teilnehmer erreichbar ist, auswählbar sind, wobei die Auswahldatei mit der Adresskennung verknüpft ist, mit einer Überprüfungseinrichtung zur Überprüfung, welche Kommunikationskanäle des zweiten Teilnehmers zur Herstellung einer Kommunikationsverbindung aktiv sind, mit einer Übermittlungseinheit zum Übermitteln aller aktiven Kommunikationskanäle des zweiten Teilnehmers an das Endgerät (30) des ersten Teilnehmers.

9. Rechnereinheit nach Anspruch 8, **dadurch gekennzeichnet, dass** diese Mittel zur Durchführung des Verfahrens nach einem der Ansprüche 1 bis 7 aufweist.

10. Portal (20) innerhalb eines Kommunikationsnetzes (21) zum Bereitstellen einer Auswahl möglicher Kommunikationskanäle zum Herstellen einer Kommunikationsverbindung zwischen Endgeräten (30; 40) eines ersten Teilnehmers und eines zweiten Teilnehmers und zum Herstellen einer solchen Kommunikationsverbindung (50 a, b), aufweisend eine Rechnereinheit (21) nach Anspruch 8 oder 9.

11. Portal nach Anspruch 10, **dadurch gekennzeichnet, dass** dieses ein Media-Gateway (24) zur Herstellung einer Kommunikationsverbindung zu zumindest einem zu dem Kommunikationsnetz (10) unterschiedlichen Kommunikationsnetz (11) aufweist.
